# EUROPÄISCHE PATENTANMELDUNG

(11) **EP 3 312 444 A1**
(43) Veröffentlichungstag der Anmeldung: **25.04.2018**
(21) Anmeldenummer: 16194782.5
(22) Anmeldetag: 20.10.2016
(51) Int. Cl.: F16C 33/80, F16C 33/78, F16C 23/08

(54) **DICHTUNG FÜR EIN ROTORLAGER EINER WINDENERGIEANLAGE**

(71) Anmelder: Nordex Energy GmbH, 22419 Hamburg (DE)
(72) Erfinder: Festner, Gerald, 19288 Klein Krams (DE); Muhamad, Ibrahim, 18057 Rostock (DE); Klemp, Anja, 18057 Rostock (DE)
(74) Vertreter: Hauck Patentanwaltspartnerschaft mbB

(57) **Zusammenfassung**

Dichtung für ein Rotorlager eines Triebstrangs einer Windenergieanlage, mit zwei gegeneinander drehbar angeordneten Labyrinthringen, zwischen denen ein lagerseitiger erster Dichtspalt ausgebildet ist, und mit zwei gegeneinander drehbar angeordneten Abdeckscheiben, zwischen denen ein außenliegender zweiter Dichtspalt ausgebildet ist, wobei die Labyrinthtringe und die Abdeckscheiben einen Dichtraum bilden, in dem eine Labyrinth-Scheibe mit einem Labyrinth-Scheibenkörper angeordnet ist, wobei eine Breite des Dichtraums in axialer Richtung größer als eine Dicke des Labyrinth-Scheibenkörpers und eine Höhe des Dichtraums in radialer Richtung größer als eine Breite des Labyrinth-Scheibenkörpers ist.

## Beschreibung

Die vorliegende Erfindung betrifft eine Dichtung für ein Rotorlager eines Triebstranges einer Windenergieanlage.

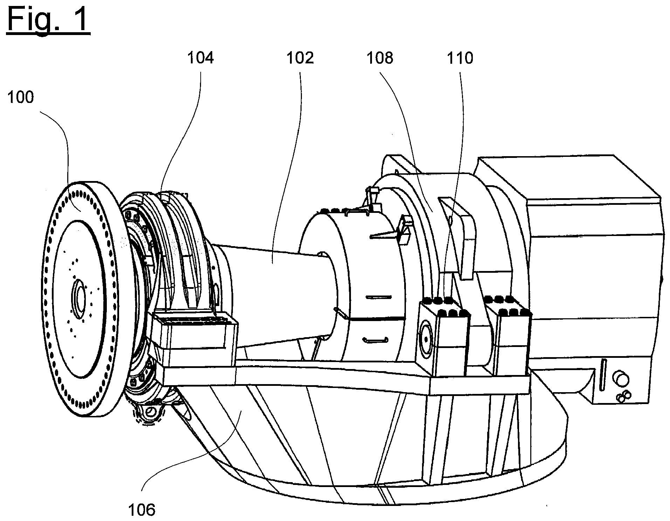

Für die Lagerung des Triebstrangs einer Windenergieanlage sind verschiedene Ansätze und Konzepte bekannt. Ein gelegentlich verwendetes Konzept ist die sogenannte "Dreipunktlagerung" von Rotorwelle und Getriebe. Der in Fig. 1 dargestellte Triebstrang besitzt eine Rotorwelle 102, die in einem Hauptlager und über ein Getriebe abgestützt ist. Das Hauptlager für die Rotorwelle 102 ist in einem Rotorlagergehäuse 104 untergebracht und stützt sich auf dem Maschinenträger 106 ab. Die Rotorwelle 102 ist Eingangswelle für ein Getriebe 108, das sich beidseitig mit einer Getriebeabstützung 110 auf dem Maschinenträger 106 abstützt. Neben der in Figur 1 gezeigten Lagerung des Triebstrangs über eine Dreipunktlagerung sind auch andere Konzepte und Ansätze zur Lagerung eines Antriebsstranges möglich, beispielsweise eine Zweipunkt-Lagerung oder eine Momentenlagerung.

Unabhängig von der konkreten Ausgestaltung der Lagerung des Triebstrangs treten aufgrund der großen einwirkenden Kräfte und Drehmomente Verformungen in den Triebstrangkomponenten auf, die zu einer Bewegung im Rotorlager führen. Starre Lagerdichtsysteme sind daher für das Rotorlager einer Windenergieanlage, insbesondere bei Verwendung von Pendelrollenlagern, nicht geeignet.

Aus WO 2009/042478 A1 ist eine flexible Dichtung bekannt, die als eine Labyrinthdichtung ausgebildet ist. Die Labyrinthdichtung besitzt ein inneres Ende, das mit einer Schmiermittelkammer des Lagers in Verbindung steht. Zusätzlich ist eine Ringdichtung vorgesehen, die das Eintreten von Schmutz in die Labyrinthdichtung verhindern soll.

Aus DE 10 2012 212 792 A1 ist eine Lageranordnung für eine Windkraftanlage bekannt geworden, bei der das Lager durch eine berührungslose Dichtung abgedichtet ist. Die berührungslose Dichtung besitzt ein an dem Rotor angebrachtes Dichtelement sowie ein an dem Stator angebrachtes Dichtelement, die zusammen einen Dichtspalt mit festgelegter Größe bilden. Die Dichtelemente sind aus Stahl hergestellt. Überschüssiges Fett gelangt durch den Dichtspalt zwischen den Dichtelementen nach außen, wodurch an dieser Stelle ein Fettkragen entsteht, der den Dichtspalt zusätzlich abdichtet und das Eindringen von Staub oder anderen unerwünschten Stoffen verhindert. An der Außenseite der Dichtung ist ein zusätzlicher V-Ring aus Elastomer vorgesehen. Der V-Ring dient als zusätzlicher Staubschutz im Bereich des Dichtspalts.

Aus DE 10 2012 212 660 ist eine Labyrinthdichtung für eine Windkraftanlage bekannt, bei der ein feststehendes Dichtelement und ein demgegenüber drehbares Dichtelement komplementär zueinander mit ineinander eingreifenden Kammerelementen vorgesehen sind. Zwischen den Dichtelementen und im Bereich der ineinander eingreifenden Kammerelemente ist ein festgelegter Dichtspalt gebildet, wobei ein Dichtelement aus Stahl und ein Dichtelement aus einem elastischen Kunststoffmaterial gebildet ist.

Aus DE 22 15 23 A1 ist eine Labyrinthdichtung bekannt, die zur Abdichtung eines Lagergehäuses mit eingebautem Wälzlager vorgesehen ist. Um den Dichteffekt einer Labyrinthdichtung auch bei Durchbiegung der Achse, bei Fluchtungsfehlern und axialer Verschiebung zu verbessern, ist ein innerer Labyrinthring aus einem flexiblen Material mit einer Vielzahl von ringförmig angeordneten vorstehenden, trapezförmig ausgebildeten Rippen mit einem äußeren Labyrinthring derart verzahnt, dass die Labyrinthringe einen sehr geringen Luftspalt bilden. Die beschriebene Labyrinthdichtung besitzt eine Vielzahl von ringförmig angeordneten, ineinander eingreifenden Rippen, die trapezförmig ausgebildet sind, wobei mindestens einer der Labyrinthringe aus einem flexiblen Material hergestellt ist.

Der Erfindung liegt die Aufgabe zugrunde, mit möglichst einfachen Mitteln eine effektiv wirkende Dichtung für das Lager einer Rotorwelle in einer Windenergieanlage bereitzustellen.

Erfindungsgemäß wird die Aufgabe durch eine Dichtung mit den Merkmalen aus Anspruch 1 gelöst. Vorteilhafte Ausgestaltungen bilden die Gegenstände der Unteransprüche.

Die erfindungsgemäße Dichtung ist vorgesehen und bestimmt für ein Rotorlager eines Triebstrangs einer Windenergieanlage. Die Dichtung besitzt zwei gegeneinander drehbar angeordnete Labyrinthringe, zwischen denen ein lagerseitiger erster Dichtspalt ausgebildet ist. Der lagerseitige Dichtspalt führt zu einer in dem Lager und zwischen seinen Laufbahnen vorgesehenen Lagerkammer. Die erfindungsgemäße Dichtung besitzt weiterhin zwei gegeneinander drehbar angeordnete Abdeckscheiben, zwischen denen ein außen liegender zweiter Dichtspalt ausgebildet ist. Die Labyrinthringe und Abdeckscheiben bilden in ihrem Inneren einen innenliegenden Dichtraum, der bevorzugt nur über die Dichtspalten mit der Umgebung in Verbindung steht. In dem Dichtraum ist eine Labyrinth-Scheibe bevorzugt lose angeordnet. Die Labyrinthscheibe weist einen Labyrinth-Scheibenkörper auf. Erfindungsgemäß besitzt der Dichtraum eine Breite in axialer Richtung, die größer als eine Dicke des Labyrinth-Scheibenkörpers ist. Ferner besitzt der Dichtraum eine Höhe in radialer Richtung, die größer als eine Breite des Labyrinth-Scheibenkörpers ist. Der in dem Dichtraum angeordnete Labyrinth-Scheibenkörper ist derart dimensioniert, dass er bei einer mittigen Anordnung im Dichtraum einen Abstand zu jeder Innenwand des Dichtraums besitzt. Durch die kleinere Dimensionierung des Labyrinth-Scheibenkörpers in dem Dichtraum kann das aus dem Lager stammende Schmiermittel um den Labyrinth-Scheibenkörper herum zu dem außenliegenden zweiten Dichtspalt strömen. Durch den Labyrinth-Scheibenkörper wird der Strömungsweg verlängert und der Volumenstrom an Schmiermittel durch die Dichtung reduziert.

In einer bevorzugten Ausgestaltung der Erfindung ist die Dicke des Labyrinth-Scheibenkörpers in axialer Richtung um einen dritten Dichtspalt kleiner als die Breite des Dichtraums. Dies bedeutet, die Dicke des Labyrinth-Scheibenkörpers plus die Weite des dritten Dichtspalts ergeben insgesamt die Breite des Dichtraums. Bei einer mittigen Position des Labyrinth-Scheibenkörpers in dem Dichtraum entstehen zwei Strömungswege für das Schmiermittel, deren Spaltmaße jeweils der Hälfte des dritten Dichtspalts entsprechen. Bei einer außermittigen Position des Labyrinth-Scheibenkörpers in dem Dichtraum entstehen zwei unterschiedlich breite Strömungswege für das Schmiermittel deren Spaltmaße in Summe der Breite des dritten Dichtspalts entsprechen.

Ebenso kann in bevorzugter Art und Weise die Breite des Labyrinth-Scheibenkörpers um einen vierten Dichtspalt kleiner als die Höhe des Dichtraums in radialer Richtung sein. Auch hier treten dann bei einer mittigen Anordnung der Labyrinth-Scheibe in dem Dichtraum zwei Strömungswege mit der Hälfte des vierten Dichtspalts als Abstand zwischen Labyrinth-Scheibenkörper und Innenwand auf. Bei einer außermittigen Position des Labyrinth-Scheibenkörpers in dem Dichtraum entstehen zwei unterschiedlich breite Strömungswege für das Schmiermittel deren Spaltmaße in Summe der Breite des vierten Dichtspalts entsprechen.

In einer bevorzugten Ausgestaltung ist der erste Dichtspalt größer oder gleich dem zweiten Dichtspalt. Tritt in dieser Ausgestaltung Schmiermittel aus dem Lager aus und in den Dichtraum ein, so wird durch den zweiten Dichtspalt der Volumenstrom durch die Abdeckscheiben gedrosselt und eine Kraft auf die Labyrinth-Scheibe ausgeübt. In einer bevorzugten Ausgestaltung kann die Labyrinth-Scheibe dann zu dem zweiten Dichtspalt hin bewegt werden, und den Austritt von Schmiermittel ganz oder teilweise sperren.

In einer weiteren bevorzugten Ausgestaltung sind der dritte und vierte Dichtspalt ungefähr gleich groß. Dies bedeutet, dass der mittig im Dichtraum angeordnete Labyrinth-Scheibenkörper Umströmungswege für das Schmiermittel bildet, die stets die gleiche Breite für ihren Dichtspalt besitzen.

Die Dichtung ist bevorzugt so ausgestaltet, dass im drehenden Betrieb des Triebstrangs und somit des Lagers der Labyrinth-Scheibenkörper im Dichtraum vollständig von Schmiermittel umgeben angeordnet ist. Im nicht drehenden Zustand des Lagers bewegt sich der Labyrinth-Scheibenkörper unter Einfluss der Schwerkraft in eine in dem Dichtraum aufliegende Position.

In einer besonders zweckmäßigen Ausgestaltung ist der Labyrinth-Scheibenkörper in radialer Richtung mit mindestens einem Vorsprung ausgestattet, mit dem der Labyrinth-Scheibenkörper in einem Abstand von einer Innenwand des Dichtraums gehalten wird. Der in radialer Richtung nach innen und/oder nach außen vorstehende, mindestens eine Vorsprung dient als Abstandshalter für den Labyrinth-Scheibenkörper gegenüber der Innenwand des Dichtraums. Hierdurch wird sichergestellt, dass auch bei einem nicht drehenden Lager der Labyrinth-Scheibenkörper stets auf beiden Seiten einen vierten Dichtspalt zur Innenwand des Dichtraums bildet. Insbesondere bei einem Anfahren des Lagers kann hierdurch schneller eine Position erreicht werden, in der der Labyrinth-Scheibenkörper frei im Dichtraum angeordnet ist und allseitig umströmt werden kann.

In einer weiteren bevorzugten Ausgestaltung ist der Labyrinth-Scheibenkörper auf einer vom Lager fortweisenden Flachseite mit Schmiermittelabschnitten ausgestattet. Insbesondere in einer Situation, wo der Labyrinth-Scheibenkörper durch einen Innendruck gegen die Abdeckscheiben gedrückt wird, kann hier eine ausreichende Schmierung zwischen der Innenseite der Abdeckscheiben und der von dem Lager fortweisenden Seite des Labyrinth-Scheibenkörpers sichergestellt werden.

In einer weiteren bevorzugten Ausgestaltung sind die Innenseiten der Abdeckscheiben mit Schmiermittelabschnitten ausgestattet. Auch so kann in einer Situation, wo der Labyrinth-Scheibenkörper durch einen Innendruck gegen die Abdeckscheiben gedrückt wird, eine ausreichende Schmierung zwischen der Innenseite der Abdeckscheiben und der von dem Lager fortweisenden Seite des Labyrinth-Scheibenkörpers sichergestellt werden. Diese Ausgestaltung ist besonders bei Ausführungen mit sehr dünnen Labyrinth-Scheibenkörpern vorteilhaft.

In einer bevorzugten Ausgestaltung besitzt der Labyrinth-Scheibenkörper eine kreisrunde Gestalt. Die kreisrunde Gestalt verleiht dem Labyrinth-Scheibenkörper einen einheitlichen Durchmesser und eine in axialer Richtung rotationssymmetrische Gestalt.

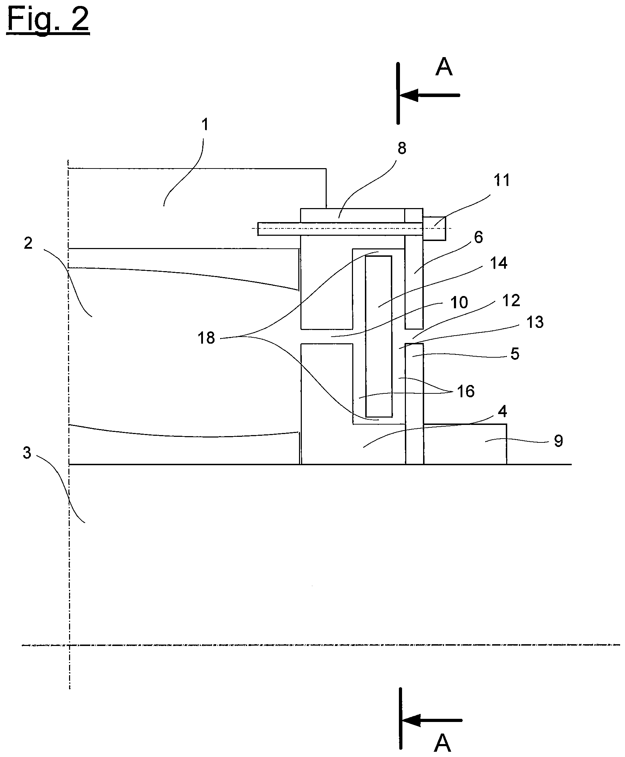

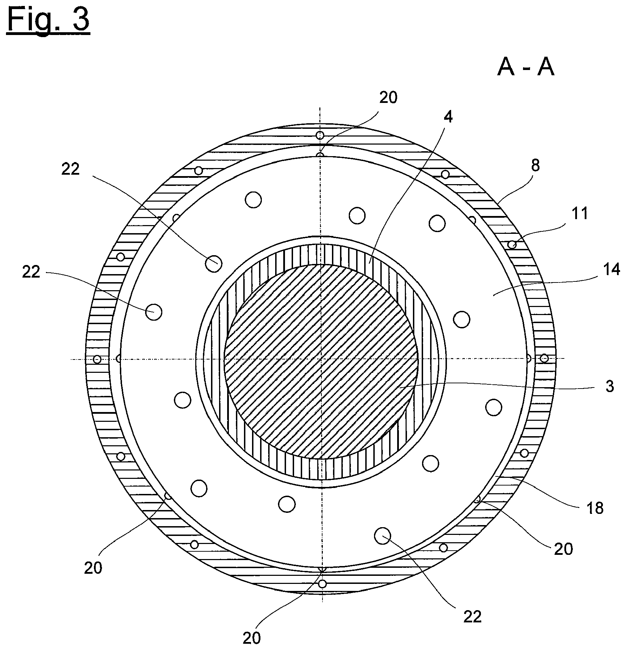

Bevorzugte Ausführungsformen der Erfindung werden nachfolgend anhand der Figuren 2 und 3 erläutert.

Fig. 2 zeigt in einer schematischen Ansicht die erfindungsgemäße Dichtungsanordnung. Zwischen einem Lagergehäuse 1 und einer Rotorwelle 3 ist ein Pendelrollenlager 2 zu erkennen. Die Wälzkörper sind zur besseren Übersicht nicht dargestellt. Die von dem Pendelrollenlager 2 gebildete Lagerkammer wird durch einen Labyrinthring 8, der mit dem Lagergehäuse 1 verbunden ist, teilweise verschlossen. Ein auf der Rotorwelle 3 aufsitzender Labyrinthring 4 verschließt ebenfalls die Lagerkammer für das Pendelrollenlager 2. Zwischen Labyrinthring 4 und 8 ist ein horizontal verlaufender erster Dichtspalt 10 gebildet.

Auf der vom Lager fortweisenden Seite sind Abdeckscheiben 5 und 6 jeweils an dem Labyrinthring 8 und dem Labyrinthring 4 befestigt. Die auf der Welle aufsitzende Abdeckscheibe 5 ist durch ein ebenfalls auf der Welle 3 aufsitzendes Befestigungselement 9 gehalten. Der Labyrinthring 6 ist über eine Schraube 11 durch den Labyrinthring 8 mit dem Lagergehäuse 1 verbunden. Zwischen den Abdeckscheiben 6 und 8 ist ein zweiter Dichtspalt 12 vorgesehen. In dem dargestellten Ausführungsbeispiel besitzen die Dichtspalte 10 und 12 die gleiche Höhe. Zwischen Labyrinthring 8 und Abdeckscheibe 6 sowie Labyrinthring 4 und Abdeckscheibe 5 ist ein Dichtraum 13 gebildet. In dem Dichtraum 13 ist ein Labyrinth-Scheibenkörper 14 lose angeordnet, der allseitig von Schmiermittel umströmt ist.

In der Terminologie der vorstehenden Ausführungsform besitzen die Scheiben, wie beispielsweise die Abdeckscheiben 5, 6 und der Labyrinth-Scheibenkörper 14 eine gleichmäßige Ausdehnung in axialer Richtung der Rotorwelle 3. Die Labyrinthringe 4 und 8 besitzen dagegen in einigen Abschnitten eine größere Erstreckung in axialer Richtung der Rotorwelle 3.

Die erfindungsgemäße Dichtanordnung besitzt den Vorteil, dass selbst bei Extremlastfällen, die zu einer Verformung von Triebstrangkomponenten und somit zu einer Pendelbewegung im Lager führen können, keine Schäden an der Labyrinthdichtung auftreten. Auch bei Extremlastfällen liegt stets ein flächiger Kontakt des Labyrinth-Scheibenkörpers mit den Wänden des Dichtraums vor, sodass Beschädigungen vermieden werden können. Weiterhin zeichnet sich die Erfindung durch ihren einfachen Aufbau mit einem flachen ringförmig verlaufenden Labyrinth-Scheibenkörper aus. Servicearbeiten können durch ein Entfernen der Abdeckscheiben einfach ausgeführt werden. Vom Temperatureinsatzbereich ist diese Dichtung auch für tiefe Temperaturen geeignet, da nur ein geringer Dichtspalt vorgesehen ist.

Fig. 3 zeigt in einer schematischen Ansicht einen Schnitt A-A der Dichtungsanordnung aus Fig. 2. Hierbei ist der rotationssymmetrische Vollschnitt dargestellt. Der Blick des Betrachters ist auf den Labyrinth-Scheibenkörper 14 gerichtet, die Labyrinthringe 4, 8 und die Rotorwelle 3 sind im Schnitt dargestellt. Der Labyrinth-Scheibenkörper 14 weist an seinem äußeren Umfang Vorsprünge 20 auf. Die Höhe dieser Vorsprünge 20 ist dabei so vorgesehen, dass diese die Labyrinthringe 4, 8 nicht berühren, wenn der Labyrinth-Scheibenkörper zentriert zur Rotorwelle 3 ausgerichtet ist. Im dargestellten Ausführungsbeispiel ist der Labyrinth-Scheibenkörper 14 aufgrund der Schwerkraft nach unten gesunken und ein Teil der Vorsprünge 20 berührt die Innenseite des Labyrinthrings 8. Zwischen den Vorsprüngen 8 bleibt der vierte Dichtspalt 18 erhalten.

Weiterhin sind in Fig. 3 die auf der Oberfläche des Labyrinth-Scheibenkörpers 14 angeordneten Schmiermittelabschnitte 22 zu erkennen. In diesen Abschnitten sammelt sich ein Teil des austretenden Schmierfetts. Wenn der Labyrinth-Scheibenkörper 14 durch einen Innendruck gegen die Abdeckscheiben gedrückt wird, kann durch das in den Schmiermittelabschnitten 22 befindliche Schmierfett eine ausreichende Schmierung zwischen der Innenseite der Abdeckscheiben und der von dem Lager fortweisenden Seite des Labyrinth-Scheibenkörpers 14 sichergestellt werden.

### Bezugszeichenliste

- Lagergehäuse: 1
- Pendelrollenlager: 2
- Rotorwelle: 3
- Labyrinthring: 4
- Abdeckscheibe: 5
- Abdeckscheibe: 6
- Labyrinthring: 8
- Befestigungselement: 9
- Erster Dichtspalt: 10
- Schraube: 11
- Zweiter Dichtspalt: 12
- Dichtraum: 13
- Labyrinth-Scheibenkörper: 14
- Dritter Dichtspalt: 16
- Vierter Dichtspalt: 18
- Vorsprung: 20
- Schmiermittelabschnitt: 22

- Rotorwellenflansch: 100
- Rotorwelle: 102
- Rotorlagergehäuse: 104
- Maschinenträger: 106
- Getriebe: 108
- Getriebeabstützung: 110

## Patentansprüche

1. Dichtung für ein Rotorlager eines Triebstrangs einer Windenergieanlage, mit zwei gegeneinander drehbar angeordneten Labyrinthringen (4, 8), zwischen denen ein lagerseitiger erster Dichtspalt (10) ausgebildet ist, und mit zwei gegeneinander drehbar angeordneten Abdeckscheiben (5, 6), zwischen denen ein außenliegender zweiter Dichtspalt (12) ausgebildet ist, wobei die Labyrinthtringe (4, 8) und die Abdeckscheiben (5, 6) einen Dichtraum (13) bilden, in dem eine Labyrinth-Scheibe mit einem Labyrinth-Scheibenkörper (14) angeordnet ist, wobei eine Breite des Dichtraums (13) in axialer Richtung größer als eine Dicke des Labyrinth-Scheibenkörpers (14) und eine Höhe des Dichtraums (13) in radialer Richtung größer als eine Breite des Labyrinth-Scheibenkörpers (14) ist.

2. Dichtung nach Anspruch 1, **dadurch gekennzeichnet, dass** die Dicke des Labyrinth-Scheibenkörpers (14) in axialer Richtung um einen dritten Dichtspalt (16) kleiner als die Breite des Dichtraums (13) ist.

3. Dichtring nach Anspruch 1 oder 2, **dadurch gekennzeichnet, dass** der Breite des Labyrinth-Scheibenkörpers (14) in radialer Richtung um einen vierten Dichtspalt (18) kleiner als die Höhe des Dichtraums (13) ist.

4. Dichtung nach einem der Ansprüche 1 bis 3, **dadurch gekennzeichnet, dass** der erste Dichtspalt größer oder gleich dem zweiten Dichtspalt ist.

5. Dichtung nach einem der Ansprüche 1 bis 4, **dadurch gekennzeichnet, dass** der dritte und vierte Dichtspalt ungefähr gleich groß sind.

6. Dichtung nach einem der Ansprüche 1 bis 5, **dadurch gekennzeichnet, dass** im Drehbetrieb des Triebstrangs der Labyrinth-Scheibenkörper (14) frei beweglich im Dichtraum (13) angeordnet und von Schmiermittel aus dem Lager umgeben ist.

7. Dichtung nach einem der Ansprüche 1 bis 6, **dadurch gekennzeichnet, dass** der Labyrinth-Scheibenkörper (14) in radialer Richtung mindestens einen Vorsprung (20) aufweist, mit dem der Labyrinth-Scheibenkörper in einem Abstand von einer Innenwand des Dichtraums (13) gehalten ist.

8. Dichtung nach Anspruch 7, **dadurch gekennzeichnet, dass** der Labyrinth-Scheibenkörper (14) in radialer Richtung mittig in dem Dichtraum (13) angeordnet ist.

9. Dichtung nach einem der Ansprüche 1 bis 8, **dadurch gekennzeichnet, dass** der Labyrinth-Scheibenkörper (14) auf seiner vom Lager fortweisenden Flachseite Schmiermittelabschnitte (22) aufweist.
